# EUROPEAN PATENT SPECIFICATION

(11) **EP 2 570 384 B1**
(45) Date of publication and mention of the grant of the patent: **02.03.2016**
(21) Application number: 11181166.7
(22) Date of filing: 13.09.2011
(51) Int. Cl.: C01B 31/02, B82Y 35/00

(54) **Quantitative analysis of a functional group on the surface of a solid material**
Quantitative Analyse der Funktionsgruppe auf der Oberfläche eines Festmaterials
Analyse quantitative d'un groupe fonctionnel à la surface d'un matériau solide

(43) Date of publication of application: 20.03.2013
(73) Proprietor: Atomic Energy Council - Institute of Nuclear Energy Research, Taoyuan County 325 (TW)
(72) Inventor: Fu, Meng-Jun, 325 Taoyuan County (TW); Chen, Kuan-Yin, 325 Taoyuan County (TW); Chen, Chia-Chieh, 325 Taoyuan County (TW)
(74) Representative: Lang, Christian

(56) References cited:
- US-A1- 2009 306 427
- H HU ET AL: "Determination of the acidic sites of purified single-walled carbon nanotubes by acid-base titration", CHEMICAL PHYSICS LETTERS, vol. 345, no. 1-2, 1 September 2001 (2001-09-01), pages 25-28, XP55017093, ISSN: 0009-2614, DOI: 10.1016/S0009-2614(01)00851-X
- SUKRUT OZARKAR ET AL: "pH and electrical actuation of single walled carbon nanotube/chitosan composite fibers", SMART MATERIALS AND STRUCTURES, IOP PUBLISHING LTD., BRISTOL, GB, vol. 17, no. 5, 1 October 2008 (2008-10-01), page 55016, XP020145232, ISSN: 0964-1726, DOI: 10.1088/0964-1726/17/5/055016
- GONZALEZ-GUERRERO A B ET AL: "Discriminating the carboxylic groups from the total acidic sites in oxidized multi-wall carbon nanotubes by means of acid-base titration", CHEMICAL PHYSICS LETTERS, ELSEVIER BV, NL, vol. 462, no. 4-6, 10 September 2008 (2008-09-10), pages 256-259, XP024525428, ISSN: 0009-2614, DOI: 10.1016/J.CPLETT.2008.07.071 [retrieved on 2008-07-24]
- MARSHALL M W ET AL: "Measurement of functionalised carbon nanotube carboxylic acid groups using a simple chemical process", CARBON, ELSEVIER, OXFORD, GB, vol. 44, no. 7, 1 June 2006 (2006-06-01), pages 1137-1141, XP025010871, ISSN: 0008-6223, DOI: 10.1016/J.CARBON.2005.11.010 [retrieved on 2006-06-01]
- BELIN T ET AL: "Characterization methods of carbon nanotubes: a review", MATERIALS SCIENCE AND ENGINEERING B, ELSEVIER SEQUOIA, LAUSANNE, CH, vol. 119, no. 2, 25 May 2005 (2005-05-25), pages 105-118, XP025304623, ISSN: 0921-5107, DOI: 10.1016/J.MSEB.2005.02.046 [retrieved on 2005-05-25]
- KELLER N ET AL: "H/D exchange using D2O on carbon materials: A flexible tool for surface Bronsted acidity direct measurement", CATALYSIS TODAY, ELSEVIER, NL, vol. 102-103, 15 May 2005 (2005-05-15), pages 266-272, XP004898697, ISSN: 0920-5861, DOI: 10.1016/J.CATTOD.2005.02.029

## Description

### BACKGROUND OF INVENTION

### 1. FIELD OF INVENTION

The present invention relates to a quantitative analysis of a functional group on the surface of a solid material and, more particularly, to a quantitative analysis of a functional group on the surface of a solid material based on acid-base titration.

### 2. RELATED PRIOR ART

Carbon nano-tubes are a new material. The carbon nano-tubes are however not directly used after they are made because they tend to tangle with one another to form masses. To distribute the carbon nano-tubes evenly in a solution or another material, they must be subjected to a chemical process to produce a functional group on their surfaces. Generally, nitric acid or sulfuric acid is used to produce carboxylic group and/or hydroxylic group on the surfaces of the carbon nano-tubes to provide the carbon nano-tubes with affinity for a dissolvent so that the carbon nano-tubes can be suspended and distributed in the dissolvent evenly. Then, the functional groups can be bonded to another chemical material. Thus, the carbon nano-tubes are suitable for various uses. The amount of the functional group on the surfaces of the carbon nano-tubes determines the amount of the chemical material that can be bonded to the carbon nano-tubes. Therefore, it is necessary to execute a quantitative analysis for the functional group.

Conventional quantitative analysis for the carboxylic group on the surfaces of the carbon nano-tubes are based on the acid-base titration. The conventional quantitative analysis is however complicated because the carbon nano-tubes possess special properties.

For example, as set forth in Equation (1), a first number (a) of moles of carboxylic group (-COOH) included in carbon nano-tubes ("CNT") is reacted with a second number (b) of moles of sodium hydrogen carbonate (NaHCO₃) to produce the first number (a) of moles of (H₂CO₃), leaving the second number minus the first number (b - a) of moles of sodium hydrogen carbonate. By sucking filtration, the carbon nano-tubes are separated from the solution. After the separation, as set forth in Equation (2), the second number (b) of moles of hydrochloric acid (HCl) is introduced into the sodium hydrogen carbonate solution so that the remaining sodium hydrogen carbonate is turned into the second number minus the first number (b - a) of moles of sodium chloride (NaCl) and the second number (2) of moles of carbonic acid, leaving the first number (a) of moles of hydrochloric acid. As set forth in Equation (3), by heating or introduction of nitrogen, the carbonic acid is turned into carbon dioxide (CO₂) that escapes from the solution. Then, sodium hydroxide (NaOH) is used for acid-base titration of the first number (a) of moles of hydrochloric acid. From the fact that the first number of moles of sodium hydroxide is used for the titration, it is learned that the amount of the carboxylic group is the first number (a) of moles.

The foregoing process takes a long period of time. In particular, the separation of the carbon nano-tubes from the solution takes a long period of time for several reasons. Firstly, the size of the carbon nano-tubes is in the order of a nanometer and requires a filtration film with very small bores. Secondly, the very small bores of the filtration film could easily be blocked by the carbon nano-tubes. Thirdly, the acid-base titration is not sensitive, the carbon nano-tubes do not include a lot of carboxylic group, and it requires a lot of carbon nano-tubes for experiment. Therefore, the conventional quantitative analysis takes a long period of time and requires a lot of samples.

aCNT - COOH + bNaHCO₃ → aCNT - COONa + aH₂ CO₃ + (b - a)NaHCO₃ (1)

aH₂CO₃ + (b - a)NaHCO₃ + bHCl → bH₂CO₃ + aHCl+(b - a)NaCl (2)

bH₂CO₃ + aHCl + heat → bCO₂ ↑ +bH₂O + aHCl (3)

For example, 1 mole of carboxylic group included in carbon nano-tubes is reacted with 5 moles of sodium hydrogen carbonate to produce 1 mole of carbon-nano-tubes-sodium carboxylate, 4 moles of sodium hydrogen carbonate and 1 mole of carbonic acid. By sucking filtration, the carbon nano-tubes are separated from the solution. 5 moles of hydrochloric acid are introduced into the sodium hydrogen carbonate solution to produce 4 moles of sodium chloride and 5 moles of carbonic acid, with 1 mole of hydrochloric acid left. By heating, the carbonic acid is turned into carbon dioxide that escapes from the solution. Now, the solution contains 4 moles of sodium chloride and 1 mole of hydrochloric acid. Then, sodium hydroxide is used for acid-base titration of the 1 mole of hydrochloric acid that is left. From the fact that the amount of the sodium hydroxide used for the titration is 1 mole, it is learned that the amount of the carboxylic group is 1 mole.

In the conventional quantitative analysis, the amount of the sodium hydrogen carbonate must be excessive to hold the equations. Therefore, estimation must be done before the experiment. For example, 1 gram of carbon nano-tubes is used. For convenience of calculation, it is assumed that this 1 gram of carbon nano-tubes contains 100% of carboxylic group (-COOH) although the percentage cannot be 100%. 1 gram of -COOH is about 0.02222 mole. There must be provided an excessive amount of sodium hydrogen carbonate. For example, 100 ml of 0.5 N sodium hydrogen carbonate solution contains 0.05 mole of sodium hydrogen carbonate that is excessive. In addition, the carbon nano-tubes cannot contain 100% of -COOH. Evidenced by available documents, the carbon nano-tubes do not contain more than 10% of -COOH. However, should the amount of the carboxylic group be inadequate, errors such as errors of the amount of the sodium hydrogen carbonate and errors of the amount of the hydrochloric acid solution, the amount of the sodium hydrogen carbonate or the amount of the hydrochloric acid solution could be larger than the amount of the carboxylic group, and the carboxylic group could not be quantitatively analyzed. That is, the detection limit in the conventional acid-base titration is not low enough to conduct the quantitative analysis of a small amount of the carboxylic group. It is possible to make some progress such as conducting the experiment again to reduce the amount of the sodium hydrogen carbonate and increase the amount of the carbon nano-tubes, but the progress is limited.

From document US 2009/306427 A1 a process for chemically functionalizing carbon nanotubes is known, wherein carbon nanotube salt is dispersed in a solvent and wherein the carbon nanotube salt is chemically functionalized by reacting with oxidizing agents or thermally unstable, radical producing species. From document H HU ET AL: "Determination of the acidic sites of purified single-walled carbon nanotubes by acid-base titration", CHEMICAL PHYSICS LETTERS, vol. 345, no. 1-2, 1 September 2001

(2001-09-01), pages 25-28, XP55017093, ISSN: 0009-2614, DOI: 10.1016/S0009-2614(01)00851-X a measurement method of the acidic sites of single-walled carbon nanotubes is known, wherein a titration of the purified nanotubes with NaOH and NaHCO₃ is used to determine the total percentage of acidic sites and carboxylic acid groups.

The present invention is therefore intended to obviate or at least alleviate the problems encountered in prior art.

### SUMMARY OF INVENTION

It is an objective of the present invention to provide a method for quantitatively analyzing a small number of a functional group on the surface of a solid material.

It is another objective of the present invention to provide a sensitive method for quantitatively analyzing a functional group on the surface of a solid material.

It is another objective of the present invention to provide an efficient method for quantitatively analyzing a functional group on the surface of a solid material.

To achieve the foregoing objectives, the method includes the step of introducing a first material that includes carbon nano-tubes and carboxylic group into sodium hydrogen carbonate solution for reaction, thus turning the carboxylic group into sodium carboxylate and consuming the sodium ions of the solution. Then, the carbon nano-tubes are separated from the sodium hydrogen carbonate solution by centrifugal filtration. Then, the change in the amount of the sodium ions in the sodium hydrogen carbonate solution before and after the reaction in the sodium hydrogen carbonate is analyzed. The amount of the sodium ions before the reaction minus the amount of the sodium ions after the reaction is the amount of the carboxylic group. Then a sample of the second material including the sodium carboxylate attached to the carbon nano-tubes is introduced into hydrochloric acid solution for reaction, thus turning the sodium carboxylate into the carboxylic group and dissolving the sodium ions in the hydrochloric acid solution. Then, the carbon nano-tubes are separated from the hydrochloric acid solution by centrifugal filtration. Finally, the amount of sodium ions before and after the reaction in the hydrochloric acid solution is analyzed. The amount of the sodium ions after the reaction in the hydrochloric acid solution minus the amount of the sodium ions before the reaction in the hydrochloric acid solution is the amount of the carboxylic group for confirming the result of the foregoing analysis.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawing wherein:

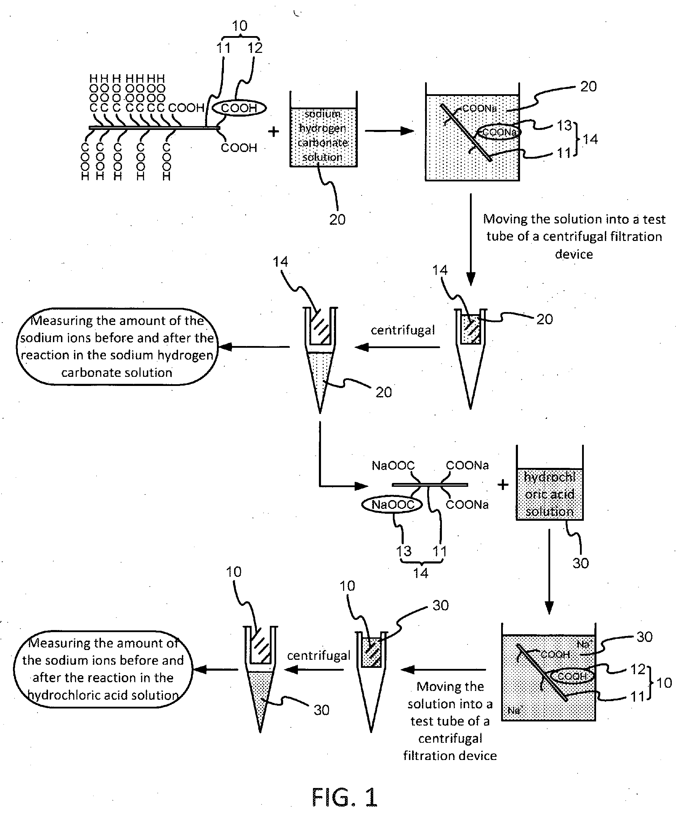

FIG. 1 is a flow chart of a method for quantitatively analyzing a functional group on the surface of a solid material in accordance with the preferred embodiment of the present invention.

### DETAILED DESCRIPTION OF PREFERRED EMBODIMENT

Referring to FIG. 1, there is shown a method for quantitatively analyzing a functional group on the surface of a solid material in accordance with the preferred embodiment of the present invention. The solid material is carbon nano-tubes for example. The functional group is carboxylic group for example. The method is based on acid-base titration.
(A) A first material 10 is introduced into sodium hydrogen carbonate solution 20 so that the first material 10 is turned into a second material 14. The first material 10 includes a first number (c) of moles of carboxylic group 12 boded to carbon nano-tubes 11. The sodium hydrogen carbonate solution 20 contains a second number (d) of moles of sodium hydrogen carbonate. The carboxylic group 12 reacts with the sodium hydrogen carbonate to produce sodium carboxylate 13 and consume the sodium ions of the sodium hydrogen carbonate solution 20. Therefore, the second material 14 includes the sodium carboxylate 13 attached to the carbon nano-tubes 11. To expedite the reaction, heating or an ultrasonic bath can be used. The sodium hydrogen carbonate solution 20 is sampled.
(B) After the reaction, the carbon nano-tubes 11 are separated from the sodium hydrogen carbonate solution 20 by centrifugal filtration. The solution includes the second number minus the first number (d-c) of mole of sodium hydrogen carbonate. As mentioned, the second material 14 includes the sodium carboxylate 13 attached to the carbon nano-tubes 11.
(C) The amount of the sodium ions contained in the sodium hydrogen carbonate solution 20 is measured before and after the reaction. The amount of the sodium ions is the second number (d) of moles. The amount of the sodium ions is the second number minus the first number (d-c) of moles. The amount (d) measured before the reaction minus the amount (d-c) measured after the reaction is the amount (c) of the carboxylic group 12.
(D) The second material 14, which includes the carbon nano-tubes 11 and the sodium carboxylate 13, is introduced into hydrochloric acid solution 30 for reaction. The sodium carboxylate 13 (c moles) carried on the carbon nano-tubes 11 is turned into carboxylic group 12 (c moles) so that the sodium ions (c moles) are dissolved in the hydrochloric acid solution 30. Again, the first material 10 is produced in the hydrochloric acid solution 30.
(E) The carbon nano-tubes 11 are separated from the hydrochloric acidsolution 30 by centrifugal filtration. As mentioned, the first material 10 includes the carboxylic group 12 carried on the carbon nano-tubes 11.
(F) The amount of the sodium ions is measured before and after the reaction with the hydrochloric acid solution 30. The amount of the sodium ions measured after the reaction minus the amount of the sodium ions measured before the reaction is the amount (c moles) of the carboxylic group 12 for confirmation of the result of Step (C).

The analysis of the amount of the sodium ions in Steps (C) and (F) may be conducted in an instrument such as an inductively coupled plasma-atomic emission spectrometry ("ICP-AES"), an atomic absorption spectrometer ("AA"), an inductively coupled plasma-mass spectrometry ("ICP-MS") or an ion chromatography ("IC").

In use, for example, 0.01 mole of the first material 10 is introduced into sodium hydrogen carbonate solution 20 that contains 1 mole of sodium hydrogen carbonate for reaction. Thus, there is produced 0.01 mole of the second material 14 and 0.99 mole of sodium hydrogen carbonate. By the centrifugal filtration, the carbon nano-tubes are separated from the solution, which contains 0.99 mole of sodium hydrogen carbonate. An ICP-AES is used to analyze the amount of the sodium ions before and after the reaction in the sodium hydrogen carbonate solution. The amount of the sodium ions before the reaction minus the amount of the sodium ions after the reaction is the amount of the consumed sodium ions. That is, 1 mole minus 0.99 mole is 0.01 mole. Hence, it is learned that the number of the first material is 0.01 mole before the reaction. Furthermore, the 0.01 mole of the second material carbon nano-tube sodium carboxylate is introduced into 1 mole of hydrochloric acid for reaction. Thus, 0.01 mole of sodium ions is released from the surface of the carbon nano-tubes. Again, the centrifugal filtration is conducted, and the ICP-AES is used to analyze the amount of the sodium ions before and after the reaction with the hydrochloric acid. It is learned that the amount of the sodium ions is increased by 0.01. Thus, it can be confirmed that the amount of the first material is 0.01 mole.

In another example, 10 mg of carbon nano-tubes reacts with 2 ml of 0.1 M sodium hydrogen carbonate solution. Furthermore, 2 ml of 0.1 M sodium hydrogen carbonate is reserved as a sample. After the reaction, centrifugal filtration is conducted to separate the carbon nano-tubes from the solution. The carbon nano-tubes are washed. The filtered solution and the 2 ml of 0.1 M sodium hydrogen carbonate solution that is reserved are frozen and dried and then dissolved in 2 ml of water. The ICP-AES is used to analyze the amount of the sodium ions. It is learned that the concentration of the sodium ions in the reserved 2 ml of 0.1 M sodium hydrogen carbonate solution is 2080 ppm while the concentration of the sodium ions in the filtered solution is 1960 ppm. It is calculated that the concentration of the first material is 1.043 mmol/g. In addition, 9 mg of carbon nano-tube-based sodium carboxylate is introduced into 2 ml of 2 N hydrochloric acid for reaction. Then, by the centrifugal filtration, the carbon nano-tubes are separated from the solution. The carbon nano-tubes are washed. The filtered solution and 2 ml of 2 N hydrochloric acid are frozen and dried and then dissolved in 1 ml of water. The ICP-AES is used to analyze the amount of the sodium ions before and after the reaction with the hydrochloric acid. It is learned that the concentration of the sodium ions in the filtered solution is 212 ppm while the concentration of the sodium ions in the 2 ml of 2 N hydrochloric acid is 1.1 ppm. It is calculated that the conetration of the first material is 1.018 mmol/g.

As discussed above, in accordance with the present invention, the quantitative analysis of the functional group is conducted with the sensitive instrument to lower the detection limit to reduce the amounts of the samples. As the amounts of the samples are reduced and the centrifugal filtration is used, the period of time required for the analysis is reduced. Furthermore, more samples can be processed in the present invention than in the prior art. In the centrifugal filtration, the amount of samples that can synchronously be processed is determined by the size of a rotor of a centrifugal machine. A typical rotor includes at least 10 bores for receiving at least 10 test tubes. On the contrary, suction filtration devices used in the prior art are bulky. Not many suction filtration devices are used in a laboratory. Hence, not many samples can synchronously be processed in a laboratory. Finally, the inductively coupled plasma-atomic emission spectrometry ("ICP-AES") is used to analyze the amount of the sodium ions before and after the reactions. Such a device is often equipped with an automatic sample-feeding device to form an automatic system to process samples at high speed. Therefore, with the present invention, the weight of the samples is reduced, the sensitivity is increased, time is saved, and the speed is increased.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A method for quantitative analyzing a functional group on the surface of a solid material based on acid-base titration, wherein the method includes the steps of:
introducing a first material (10) that includes carbon nano-tubes (11) and carboxylic group (12) into sodium hydrogen carbonate solution (20) for reaction, thus turning the carboxylic group (12) into sodium carboxylate (13) and consuming the sodium ions of the solution and turning it into a second material 14;
separating the carbon nano-tubes (11) from the sodium hydrogen carbonate solution (20) by centrifugal filtration;
analyzing the change in the amount of the sodium ions in the sodium hydrogen carbonate solution (20) before and after the reaction in-the sodium hydrogen carbonate, wherein the amount of the sodium ions before the reaction minus the amount of the sodium ions after the reaction is the amount of the carboxylic group (12);
introducing a sample of the second material (14) into hydrochloric acid solution (30) for reaction, thus turning the sodium carboxylate (13) into the carboxylic group (12) and dissolving the sodium ions in the hydrochloric acid solution (30);
separating the carbon nano-tubes (11) from the hydrochloric acid solution (30) by centrifugal filtration; and
analyzing the amount of sodium ions before and after the reaction in the hydrochloric acid solution (30), wherein the amount of the sodium ions after the reaction in the hydrochloric acid solution (30) minus the amount of the sodium ions before the reaction in the hydrochloric acid solution (30) is the amount of the carboxylic group (12) for confirming the result of the foregoing analysis.

2. The method for quantitative analyzing a functional group on the surface of a solid material in accordance with claim 1, wherein the analyses of the amount of the sodium ions steps are conducted by a-device selected from the group consisting of an inductively coupled plasma-atomic emission spectrometry, an atomic absorption spectrometer, an inductively coupled plasma-mass spectrometry and an ion chromatography.

3. The method for quantitative analyzing a functional group on the surface of a solid material In accordance with claim 1, wherein the solid material is carbon nano-tubes (11).

4. The method for quantitative analyzing a functional group on the surface of a solid material in accordance with claim 1, wherein the functional group is the carboxylic group (12).

5. The method for quantitative analyzing a functional group on the surface of a solid material in accordance with claim 1, further including the step of heating to expedite the reaction in the sodium hydrogen carbonate solution (20).

6. The method for quantitative analyzing a functional group on the surface of a solid material in accordance with claim 1, further including the step of executing an ultrasonic bath to expedite the reaction in the sodium hydrogen carbonate solution (20).

## Patentansprüche

1. Verfahren zur quantitativen Analyse einer funktionellen Gruppe auf der Oberfläche eines Festkörpermaterials basierend auf einer Säure-Base-Titration, wobei das Verfahren die folgenden Verfahrensschritte aufweist:
Zuführen eines ersten Materials (10), das Kohlenstoffnanoröhrchen (11) und eine Carboxylgruppe (12) umfasst, in eine Natriumhydrogencarbonatlösung (20) zwecks Reaktion, sodass die Carboxylgruppe (12) in ein Natriumcarboxylat (13) umgewandelt wird und die Natriumionen der Lösung verbraucht und es in ein zweites Material (14) umgewandelt wird,
Trennen der Kohlenstoffnanoröhrchen (11) von der Natriumhydrogencarbonatlösung (20) mittels Zentrifugalfiltration,
Analysieren der Mengenänderung der Natriumionen in der Natriumhydrogencarbonatlösung (20) vor und nach der Reaktion in dem Natriumhydrogenkarbonat, wobei die Menge der Natriumionen vor der Reaktion minus die Menge der Natriumionen nach der Reaktion die Menge der Carboxylgruppe (12) ergibt,
Zuführen einer Probe des zweiten Materials (14) in die Salzsäurelösung (30) zwecks Reaktion, sodass das Natriumcarboxylat (13) in die Carboxylgruppe (12) umgewandelt wird und die Natriumionen in der Salzsäurelösung (30) aufgelöst werden,
Trennen der Kohlenstoffnanoröhrchen (11) von der Salzsäurelösung (30) mittels Zentrifugalfiltration und
Analysieren der Menge der Natriumionen vor und nach der Reaktion in der Salzsäurelösung (30), wobei die Menge der Natriumionen nach der Reaktion in der Salzsäurelösung (30) minus die Menge der Natriumionen vor der Reaktion in der Salzsäurelösung (30) die Menge der Carboxylgruppe (12) ist, um das Resultat der vorangegangenen Analyse zu bestätigen.

2. Verfahren zur quantitativen Analyse einer funktionellen Gruppe auf der Oberfläche eines Festkörpermaterials nach Anspruch 1, wobei die Verfahrensschritte der Mengenanalyse der Natriumionen durch eine Vorrichtung aus der Gruppe bestehend aus einer induktiv gekoppelten Plasmaatomemissionsspektroskopie, einem Atomabsorptionsspektrometer, einer induktiv gekoppelten Plasmamassenspektroskopie und einer lonenchromatographie durchgeführt wird.

3. Verfahren zur quantitativen Analyse einer funktionellen Gruppe auf der Oberfläche eines Festkörpermaterials nach Anspruch 1, wobei das Festkörpermaterial Kohlenstoffnanoröhrchen (11) sind.

4. Verfahren zur quantitativen Analyse einer funktionellen Gruppe auf der Oberfläche eines Festkörpermaterials nach Anspruch 1, wobei die funktionelle Gruppe die Carboxylgruppe (12) ist.

5. Verfahren zur quantitativen Analyse einer funktionellen Gruppe auf der Oberfläche eines Festkörpermaterials nach Anspruch 1, weiter umfassend den Verfahrensschritt des Aufheizens zwecks Beschleunigung der Reaktion in der Natriumhydrogencarbonatlösung (20).

6. Verfahren zur quantitativen Analyse einer funktionellen Gruppe auf der Oberfläche eines Festkörpermaterials nach Anspruch 1, weiter umfassend den Verfahrensschritt der Durchführung eines Ultraschallbads zwecks Beschleunigung der Reaktion in der Natriumydrogencarbonatlösung (20).

## Revendications

1. Procédé d'analyse quantitative d'un groupe fonctionnel sur la surface d'un matériau solide à base d'un titrage acide/base, le procédé comprenant les étapes :
d'introduction d'un premier matériau (10) qui comprend des nanotubes de carbone (11) et un groupe carboxylique (12) dans une solution d'hydrogénocarbonate de sodium (20) pour la réaction, en transformant le groupe carboxylique (12) en carboxylate de sodium (13) et en consommant des ions de sodium de la solution et en transformant en un second matériau (14),
de séparation des nanotubes de carbone (11) de la solution d'hydrogénocarbonate de sodium (20) par filtration centrifuge,
d'analyse du changement de quantité des ions de sodium dans la solution d'hydrogénocarbonate de sodium (20) avant et après la réaction dans l'hydrogénocarbonate de sodium, la quantité des ions de sodium avant la réaction moins la quantité des ions de sodium après la réaction étant la quantité du groupe carboxylique (12),
d'introduction d'un échantillon du second matériau (14) dans une solution d'acide chlorhydrique (30) pour réaction en transformant ainsi le carboxylate de sodium (13) en groupe carboxylique (12) et en dissolvant les ions de sodium dans la solution d'acide chlorhydrique (30),
de séparation des nanotubes de carbone (11) de la solution d'acide chlorhydrique (30) par filtration centrifuge et
d'analyse de la quantité des ions de sodium avant et après la réaction dans la solution d'acide chlorhydrique (30), la quantité des ions de sodium après la réaction dans la solution d'acide chlorhydrique (30) moins la quantité des ions de sodium avant la réaction dans la solution d'acide chlorhydrique (30) étant la quantité du groupe carboxylique (12) pour confirmer le résultat de l'analyse précédente.

2. Procédé d'analyse quantitative d'un groupe fonctionnel sur la surface d'un matériau solide selon la revendication 1, les analyses de la quantité des étapes des ions de sodium étant effectuées par un dispositif sélectionné dans le groupe comprenant une spectrométrie d'émission atomique à plasma à couplage inductif, un spectromètre d'absorption atomique, une spectrométrie de masse à plasma à couplage inductif et une chromatographie d'ions.

3. Procédé d'analyse quantitative d'un groupe fonctionnel sur la surface d'un matériau solide selon la revendication 1, le matériau solide étant des nanotubes de carbone (11).

4. Procédé d'analyse quantitative d'un groupe fonctionnel sur la surface d'un matériau solide selon la revendication 1, le groupe fonctionnel étant le groupe carboxylique (12).

5. Procédé d'analyse quantitative d'un groupe fonctionnel sur la surface d'un matériau solide selon la revendication 1, comprenant de plus l'étape de chauffage pour accélérer la réaction dans la solution d'hydrogénocarbonate de sodium (20).

6. Procédé d'analyse quantitative d'un groupe fonctionnel sur la surface d'un matériau solide selon la revendication 1, comprenant de plus l'étape d'exécuter un bain ultrasonique pour accélérer la réaction dans la solution d'hydrogénocarbonate de sodium (20).
